# EUROPÄISCHE PATENTSCHRIFT

(11) **EP 0 426 054 B1**
(45) Veröffentlichungstag und Bekanntmachung des Hinweises auf die Patenterteilung: **28.12.1994**
(21) Anmeldenummer: 90120646.6
(22) Anmeldetag: 27.10.1990
(51) Int. Cl.: B01D 53/34, B01D 53/02, C22B 7/02, F23J 15/00

(54) **Verfahren zur Entfernung von Schwefeldioxid und ggf. Stickstoffoxiden und anderen Verunreinigungen aus dem Abgas einer Abfallstoffverbrennungsanlage**
Method of removing sulphur dioxide and if applicable nitrogen oxides and other impurities from the exhaust gas of waste incineration
Procédé pour éliminer de l'anhydride sulfureux et au besoin des oxydes d'azote et d'autres impuretés d'un gaz d'échappement d'une composition de déchets

(30) Priorität: 03.11.1989 DE 3936708
(43) Veröffentlichungstag der Anmeldung: 08.05.1991
(73) Patentinhaber: Hugo Petersen Ges. für verfahrenstechn. Anlagenbau mbH & Co KG, 65036 Wiesbaden (DE)
(72) Erfinder: Shamekhi, Reza, Dr.-Ing., W-5276 Wiehl (DE)
(74) Vertreter: Carstens, Wilhelm, Dipl.-Phys.

(56) Entgegenhaltungen:
- EP-A- 0 289 809
- EP-A- 0 305 779
- EP-A- 0 359 931
- DE-A- 3 605 589
- TECHNISCHE RUNDSCHAU, Band 82, Nr. 15, 12. April 1990, Seiten 40-43, Bern, CH;A. BECKER: "Emissionslos"

## Beschreibung

Die Erfindung betrifft ein Verfahren zur Entfernung von Schwefeldioxid und ggf. Stickstoffoxiden sowie anderen Verunreinigungen aus dem Abgas einer Feuerung, bei dem zunächst der Hauptteil an Schwefeldioxid durch Zugabe von schwefeldioxidbindenden Additiven entfernt wird, danach in einer ersten Schicht aus körnigem, kohlenstoffhaltigem Adsorptionsmittel weiteres Schwefeldioxid entfernt wird und ggf. nach Zugabe eines Reduktionsmittels die Stickstoffoxide in einer zweiten Schicht aus körnigem, kohlenstoffhaltigem Adsorptionsmittel entfernt werden, wobei zumindest ein Teil von aus der ersten Schicht abgezogenem Adsorptionsmittel einer Verbrennung unter Erreichung eines Schmelzzustandes zugeführt wird.

Ein solches Verfahren ist aus der DE-A 36 05 589 bekannt geworden. Es wird dabei offengelassen, ob vor der Entfernung des Hauptteils an Schwefeldioxid durch Zugabe von schwefeldioxidbindenden Additiven der Flugstaub in dem aus der Feuerung austretenden Rauchgas entfernt wird. Es wird zwar darauf hingewiesen, daß das hauptteilentschwefelte Abgas Schwermetallverbindungen enthalten kann, es fehlen jedoch einzelne Angaben zur Entfernung der Schwermetalle. Die erste Schicht wird mit einem preiswerten, körnigen, kohlenstoffhaltigen Adsorptionsmittel beschickt, wie z. B. Bruchkoks und zumindest teilweise einer Schmelzfeuerungsanlage zugeführt. Das bei der Verbrennung in der Feuerungsanlage am Bruchkoks adsorbierte Schwefeldioxid wird dabei freigesetzt und mit dem Abgas der Feuerung vermischt. Die nicht flüchtigen Bestandteile werden in die Schlacke der Schmelzfeuerungsanlage eingebunden. In die Schmelzfeuerung wird auch Flugstaub zurückgeführt.

Aus der EP-A2 0 305 779 ist ein Verfahren zur thermischen Entsorgung von Abfallstoffen bekannt, bei dem die Abfallstoffe in einem Zyklon bei hohen Temperaturen unter Bildung einer schadstoffarmen, schmelzflüssigen Schlacke und eines heißen Abgases verbrannt werden, welches flüchtige Wertstoffe und/oder Schadstoffe enthält. Das Abgas wird gekühlt, um durch Kondensation die Wert- und/oder Schadstoffe abzuscheiden. Insbesondere soll das dortige Verfahren auch auf Flugstäube aus thermischen Entsorgungsprozessen angewendet werden, die bisher in Sonderdeponien eingelagert werden mußten. Durch die Umwandlung in eine laugungsresistente, dichte Schlacke kann unter Umständen auf die Deponie verzichtet und die Schlacke verwertet werden.

Es ist die Aufgabe der vorliegenden Erfindung, das aus der DE-A 36 05 589 bekannte Verfahren so zu gestalten, daß bei der Verbrennung von Abfallstoffen sowohl die belasteten Filteraschen bzw. Flugstäube als auch die für die Entschwefelung und ggf. Entstickung eingesetzten körnigen, kohlenstoffhaltigen Adsorptionsmittel auf einfache Weise entsorgt werden können.

Diese Aufgabe wird dadurch gelöst, daß aus dem Abgas einer Abfallstoffverbrennungsanlage vor Entfernung des Hauptteils an Schwefeldioxid die Filterasche entfernt wird, daß die Filterasche zusammen zumindest mit dem aus der ersten Schicht abgezogenen kohlenstoffhaltigen Adsorptionsmaterial in ein Schmelzaggregat eingebracht und dort verschmolzen wird, und das Abgas des Schmelzvorganges nach einer Abkühlung dem Abgas der Abfallstoffverbrennungsanlage zumindest vor dem Entfernen des Hauptteils des Schwefeldioxids zugeführt wird, während die beim Abkühlen des Abgases des Schmelzvorganges auskondensierten Metalle abgezogen werden.

Die Erfindung beruht auf der Erkenntnis, daß die zum Einschmelzen der Filterasche, d. h. die zum Verglasen der Asche erforderliche Energie auf einfache Weise durch das bei der Entschwefelung und ggf. bei der Entstickung eingesetzten kohlenstoffhaltigen Adsorptionsmittel bereitgestellt werden kann.

Vorzugsweise wird der ersten Schicht zur Entfernung des weiteren Schwefeldioxidgehalts eine weitere Schicht aus körnigem, kohlenstoffhaltigem Material zur Entfernung von dampfförmigem Quecksilber und zur Feinentstaubung vorgeschaltet. Das aus dieser weiteren Schicht abgezogene Material wird zum Verdampfen des adsorbierten Quecksilbers erwärmt und das verdampfte Quecksilber adsorbiert oder durch Kühlung auskondensiert. Das von dem Quecksilber befreite kohlenstoffhaltige Adsorptionsmaterial aus der weiteren Schicht wird ebenfalls dem Schmelzaggregat zugeführt.

Wenn die Abfallstoffverbrennungsanlage in üblicher Weise als Rostfeuerung, Wirbelschicht oder Drehrohrofen ausgeführt ist, fallen neben der mit dem Abgas aus der Verbrennungsanlage ausgetragenen Filterasche noch weitere Nebenprodukte wie Kesselasche, Rostabwurf, Wirbelbettasche und Schlacke an. Es ist daher von Vorteil, wenn aus der Abfallstoffverbrennungsanlage nicht über das Abgas ausgetragene Verbrennungsrückstände ebenfalls dem Schmelzvorgang zugeführt werden, um zum einen die noch in ihnen enthaltenen Kohlenstoffanteile zu verbrennen und zum anderen auch diese in eine laugungsresistente, dichte Schlacke zu überführen. Die Kesselschlacke ist poröser als die in dem Schmelzaggregat erzeugte verglaste Schlacke, so daß es durchaus auch sinnvoll sein kann die Kesselschlacke umzuschmelzen. Hierbei kann es jedoch erforderlich sein, mehr Brennstoff als das Adsorptionsmaterial aus den Gasreinigungsschichten zuzuführen.

Da die Schicht zur Entfernung von Stickstoffoxiden eine katalytisch wirkende Schicht ist, wird üblicherweise ein hochwertiges kohlenstoffhaltiges Adsorptionsmittel für diese Schicht eingesetzt und die Schicht als quasi stationäre Schicht gefahren, die erst bei Anstieg des Druckanfalls bewegt werden muß. Es daher zweckmäßig, daß das aus der Entstickungsschicht abgezogene Material einer Siebung unterzogen wird und das Überkorn in die Schicht zurückgeführt und das Unterkorn ebenfalls dem Schmelzaggregat zugeführt wird.

Die Erfindung soll nun anhand der beigefügten FIG. näher erläutert werden.

Einer schematisch dargestellten Müllverbrennungsanlage bestehend aus einem Feuerraum 1 mit Verbrennungsrost 2 wird bei 3 Müll zugeführt. Das bei der Verbrennung entstehende Rauchgas durchläuft einen Kesselabschnitt 4 und tritt von dort in einen Entstauber 5 ein, der als Tuchfilter oder E-filter ausgebildet sein kann. Wie in der FIG. schematisch dargestellt ist, können folgende Nebenprodukte neben dem Abgas auftreten: der Rostabwurf 6, die Kesselschlacke 7, die Kesselasche 8 und die Filterasche 9.

Das entstaubte Abgas wird einer Rauchgasentschwefelungsanlage 10 zugeführt, in der mittels eines schwefelbindenden Additives 11 der Hauptteil an Schwefel entfernt wird. Für die Rauchgasentschwefelungsanlage 10 eignen sich alle bekannten nassen, halbtrockenen oder trockenen Rauchgasentschwefelungsverfahren. Die Reaktionsprodukte der Rauchgasentschwefelung werden bei 12 abgezogen.

Das vom Hauptteil des Schwefeldioxids befreite Abgas tritt in einen Reaktor 13 mit einem Gasverteilungsraum 13a und einem Gassammelraum 13b ein. In dem Reaktor (sind zwischen gasdurchlässigen Wänden, z.B. Jalousien und/oder Lochblechen eine Schicht 14 und eine Schicht 15 aus einem körnigen, kohlenstoffhaltigen Adsorptionsmaterial eingebracht. Das Material wird kontinuierlich oder diskontinuierlich oben eingeführt und bei 16 bzw. 17 abgezogen. In der ersten Schicht 14 schlägt sich auf den Körnern des Adsorptionsmittels das in Dampfform im Abgas vorhandene Quecksilber nieder. Weiterhin wird von dieser Schicht der noch im Rauchgas vorhandene Feinstaub an Filterasche, Additiv und Reaktionsprodukt aufgefangen. Entsprechend der Beladung wird diskontinuierlich oder kontinuierlich über 16 Schichtmaterial aus der Schicht 14 abgezogen und einer Desorptionsanlage 18 zugeleitet in dem durch Wärmezufuhr 18a das Quecksilber desorbiert wird. Das Desorptionsgas wird über Leitung 19 einem Quecksilberadsorber 20, der mit einem höherwertigem, kohlenstoffhaltigen Adsorptionsmaterial gefüllt ist, zugeführt. Solche Hg-Adsorber gehören zum Stand der Technik. Es ist auch möglich, das Hg durch Kühlung auszukondensieren.

Das vom Quecksilber befreite Desorptionsgas wird über Leitung 19 zur Müllverbrennungsanlage 1,2,4 oder vor die Rauchgasreinigungsanlage 10 zurückgeführt. Der mit Quecksilber beaufschlagte Adsorber wird bei 21 abgezogen. Aus der Desorptionsanlage 18 wird das Material aus der Schicht 14 über Leitung 22 mit dem aus der Schicht 15 abgezogenen und mit Schwefeldioxid, HCl, H₂SO₄, HF-beladenen Material aus der Schicht 15 zusammengeführt und in ein schematisch dargestelltes mit einer Isolierung 24 versehenes Schmelzaggregat 25 eingebracht.

Diesem Schmelzaggregat werden bei der gezeigten Ausführungsform auch der Rostabwurf 6, die Kesselasche 8 und die Filterasche 9 über Leitung 26 zugeführt.

Es ist auch möglich, die Schicht 15 noch derart zu unterteilen, daß auf der Gasaustrittsseite eine dünnere, getrennt abziehbare Schicht mit zugeordnetem Abzug entsteht.

Das entschwefelte Rauchgas wird einem DeNOₓ-Reaktor 27 mit Gasverteilungsraum 27a und Gassammelraum 27b zugeführt, nachdem ihm bei 28 ein Reduktionsmittel, z. B. NH₃, Ammoniakwasser oder Ammoniakvorstufen, oder Harnstoff oder dgl. zugesetzt worden ist. In dem Reaktor 27 ist eine quasi stationäre Schicht 29 aus einem körnigen, kohlenstoffhaltigen Mittel eingebracht, das der katalytischen Reduktion der NOₓ-Verbindungen dient.

Dieses körnige, kohlenstoffhaltige Mittel wird oben in den Reaktor 27 eingebracht, unten abgezogen und einer Siebeinrichtung 30 zugeführt. Das überkorn wird über Leitung 31 zum Reaktorkopf 27 zurückgeführt, während das Unterkorn über Leitung 31 ebenfalls dem Schmelzaggregat zugeführt wird.

Bei einer üblichen Müllzusammensetzung werden über Leitung 26 20-40 kg/h pro t Müll dem Schmelzaggregat zugeführt, während über Leitung 22 3-15 kg/h pro t Müll an körnigem, kohlenstoffhaltigem Adsorptionsmittel bzw. katalytisch wirksamem Mittel zugeleitet werden. Die 3-15 kg/h reichen aus, um bei entsprechender Luftzufuhr 32 im Schmelzaggregat 25 Filterasche 9, Rostabwurf 6 und Kesselasche 8 zu einer dichten, auslaugungsfesten, verglasten Schlacke zu verschmelzen.

Das Abgas des Schmelzvorgangs wird über Leitung 33 einer Kondensationseinrichtung 34 zugeführt, in der dem Abgas des Schmelzvorganges, wie bei 34a schematisch gezeigt, Wärme entzogen wird, so daß im Abgas vorhandene Schwermetalle in der Kondensationseinrichtung 34 auskondensieren und bei 34b abgezogen werden können. In das Schmelzaggregat werden adsorbierte Schwermetalle über das Schichtmaterial eingetragen, aber auch durch den Rostabwurf, die Kesselasche und die Filterasche. Das die Kondensationseinrichtung 34 verlassende Rauchgas wird über Leitung 19 der Feuerungsanlage zugeführt (gestrichelt) oder dem Abgas vor der Rauchgasreinigungsanlage 10 zugegeben (ausgezogen), wie dies schematisch durch die die Kondensationseinrichtung 34 mit der Leitung 19 verbindende Leitung 35 dargestellt ist.

Die im Schmelzaggregat 25 anfallende Schlacke wird bei 25a abgezogen und verwertet bzw. deponiert.

Falls auch die Schlacke 7 im Schmelzaggregat 25 erschmolzen werden soll, müßte zusätzlicher Brennstoff aufgegeben werden.

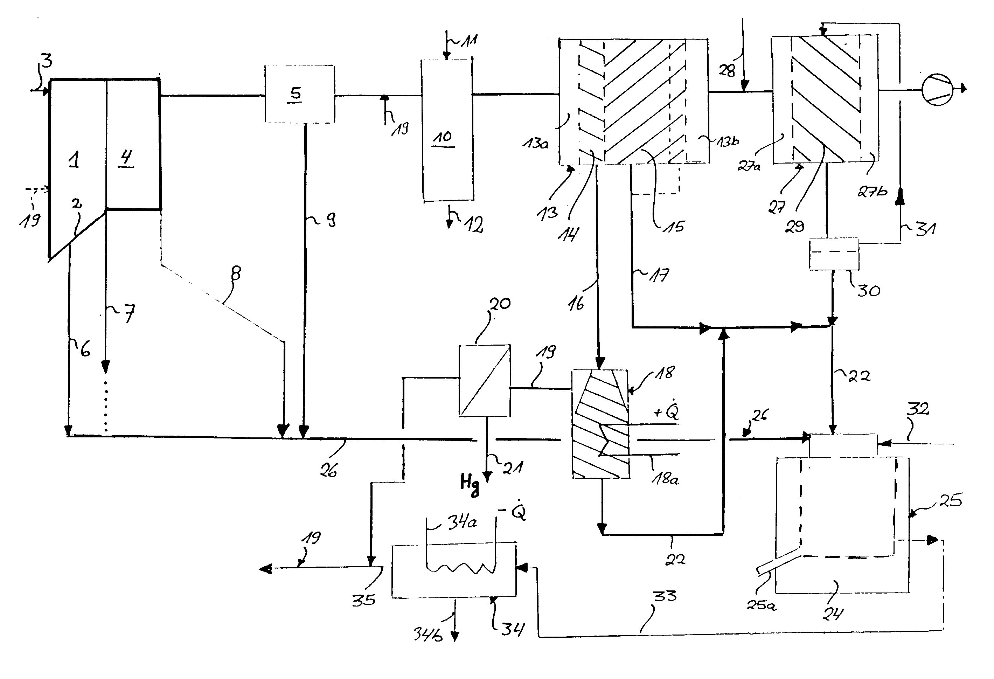

## Patentansprüche

1. Verfahren zur Entfernung von Schwefeldioxid und ggf. Stickstoffoxiden sowie anderen Verunreinigungen aus dem Abgas einer Feuerung, bei dem zunächst der Hauptteil an Schwefeldioxid durch Zugabe von schwefeldioxidbindenden Additiven entfernt wird, danach in einer ersten Schicht aus körnigem kohlenstoffhaltigen Adsorptionsmittel weiteres Schwefeldioxid enternt, und ggf. nach Zugabe eines Reduktionsmittels die Stickstoffoxide in einer zweiten Schicht aus körnigem kohlenstoffhaltigen Adsorptionsmittel entfernt werden, wobei zumindest ein Teil von aus der ersten Schicht abgezogenem Adsorptionsmittel einer Verbrennung unter Erreichung eines Schmelzzustandes zugeführt wird,
**dadurch gekennzeichnet,**
daß aus dem Abgas einer Abfallstoffverbrennungsanlage vor Entfernung (10) des Hauptteils an Schwefeldioxid die Filterasche (9) entfernt wird, daß die Filterasche (9) zumindest mit dem aus der ersten Schicht (15) abgezogenen kohlenstoffhaltigen Adsorptionsmaterial (17) in ein Schmelzaggregat (25) eingebracht und dort verschmolzen wird, und das Abgas (33) des Schmelzvorganges nach einer Abkühlung (34) dem Abgas der Abfallstoffverbrennungsanlage zumindest vor dem Entfernen des Hauptteils des Schwefeldioxids zugeführt wird, während die beim Abkühlen des Abgases des Schmelzvorganges auskondensierten Metalle abgezogen werden.

2. Verfahren nach Anspruch 1,
**dadurch gekennzeichnet**,
daß der ersten Schicht (15) zur Entfernung des weiteren Schwefeldioxidgehalts eine weitere Schicht (14) aus körnigem, kohlenstoffhaltigem Material zur Entfernung von dampfförmigem Quecksilber und zur Feinentstaubung vorgeschaltet wird.

3. Verfahren nach Anspruch 2,
**dadurch gekennzeichnet**,
daß das aus der weiteren Schicht (14) abgezogene Material (16) zum Verdampfen des adsorbierten Quecksilbers erwärmt (18a) und das verdampfte Quecksilber adsorbiert oder durch Kühlung auskondensiert wird.

4. Verfahren nach Anspruch 3,
**dadurch gekennzeichnet**,
daß das vom Quecksilber befreite kohlenstoffhaltige Adsorptionsmaterial aus der weiteren Schicht ebenfalls dem Schmelzaggregat (25) zugeführt wird.

5. Verfahren nach mindestens einem der Ansprüche 1-4,
**dadurch gekennzeichnet**,
daß aus der Abfallstoffverbrennungsanlage nicht über das Abgas ausgetragene Verbrennungsrückstände ebenfails dem Schmelzvorgang zugeführt werden.

6. Verfahren nach mindestens einem der Ansprüche 1-5,
**dadurch gekennzeichnet**,
daß für die Schicht (27) für die Entfernung von Stickstoffoxiden ein hochwertiges, kohlenstoffhaltiges Adsorptionsmittel (29) eingesetzt wird, und das aus der Entstickungsschicht (29) abgezogene Material einer Siebung (30) unterzogen wird, und das Überkorn in die Schicht (29) zurückgeführt und das Unterkorn ebenfalls dem Schmelzaggregat (25) zugeführt wird.

## Claims

1. A process for the removal of sulphur dioxide and eventually nitrogen oxides as well as other impurities from the waste gas of a firing system, with which at first the main portion of sulphur dioxide is removed by adding sulphur dioxide binding additives, thereafter in a first layer of granular carbonaceous adsorption agent further carbon dioxide is removed and eventually after adding of an reduction agent the nitrogen oxides are removed in a second layer of granular carbonaceous adsorption agent, at least part of adsorption agent, witch is withdrawn from the first layer, being fed to a combustion allowing the reaching of a molten state, characterized in that from the waste gas of a waste fuel combustion plant the filter ash (9) is removed before removing (10) of the main portion of sulphur dioxide, in that the filter ash (9) is fed into a melting unit (25) at least together with the carbonaceous adsorption agent (17) withdrawn from the first layer (15) and is melted therewith, and in that the waste gas (33) of the melting operation is after cooling (34) fed to the waste gas of the waste fuel combustion plant at least before the removal of the main portion of the carbon dioxide, while the metals having condensated during the cooling of the waste gas of the melting operation are withdrawn.

2. The process according to claim 1, characterized in that before the first layer (15) for the removal of the further contents of sulphur dioxide a second layer (14) of granular carbonaceous material is arranged to remove vapour state mercury and to remove fine dust particles.

3. The process according to claim 2, characterized in that the material (16) withdrawn from the further layer (14) is heated (18a) to vapourize the adsorbed mercury and in that the vapourized mercury is adsorbed or condensed by cooling.

4. The process according to claim 3, characterized in that the carbonaceous material from the further layer, which is free of mercury, is also fed to the melting aggregate (25).

5. The process according to at least one of the claims 1-4, characterized in that the combustion residues, which are not removed from the waste fuel combustion plant by the waste gas, are also fed to the melting operation.

6. The method according to at least one of the claims 1-5, characterized in that for the layer (27) for the removal of nitrogen oxides a high value carbonaceous adsorption agent (29) is used and in that the material withdrawn from the denoxification layer (29) is submitted to a sieving action (30) and in that the oversize particles are fed back into the layer (29) and the undersize particles are also fed to the melting unit.

## Revendications

1. Procédé permettant de séparer des fumées d'un foyer l'anhydride sulfureux et éventuellement les oxydes d'azote, ainsi que d'autres impuretés, selon lequel on sépare d'abord la partie principale d'anhydride sulfureux en ajoutant des additifs qui fixent l'anhydride sulfureux, puis on sépare le reste de l'anhydride sulfureux dans une première couche d'agent d'adsorption granulé contenant du carbone et, éventuellement après addition d'un agent de réduction, on sépare les oxydes d'azote dans une seconde couche d'agent d'adsorption granulé contenant du carbone, au moins une partie de l'agent d'adsorption extrait de la première couche étant envoyé à une combustion permettant d'obtenir un état de fusion, caractérisé en ce qu'avant de séparer (10) la partie principale de l'anhydride sulfureux à partir des fumées d'une installation d'incinération des déchets, on en sépare les cendres de filtre (9), en ce qu'on introduit et fait fondre les cendres de filtre dans un appareil de fusion (25), en même temps qu'au moins la matière d'adsorption (17) contenant du carbone qui est extraite de la première couche (15) et en ce qu'après un refroidissement (34), on envoie les gaz (33) de l'opération de fusion dans les fumées de l'installation d'incinération des déchets, au moins avant l'extraction de la partie principale de l'anhydride sulfureux, tandis qu'on extrait les métaux séparés par condensation lors du refroidissement des gaz de l'opération de fusion.

2. Procédé selon la revendication 1, caractérisé en ce qu'en amont de la première couche (15) servant à séparer la teneur restante en anhydride sulfureux, on dispose une seconde couche (14) en matière granulée contenant du carbone qui est destinée à séparer le mercure sous forme de vapeur et à séparer la poussière fine.

3. Procédé selon la revendication 2, caractérisé en ce qu'on élève la température de la matière (16) extraite de la seconde couche (14), en vue de vaporiser le mercure adsorbé, et on adsorbe le mercure vaporisé ou on le sépare par condensation au moyen d'un refroidissement.

4. Procédé selon la revendication 3, caractérisé en ce qu'on envoie aussi à l'appareil de fusion (25) la matière d'adsorption contenant du carbone qui provient de la seconde couche et dont le mercure a été séparé.

5. Procédé selon au moins l'une des revendications 1 à 4, caractérisé en ce qu'on envoie aussi à l'opération de fusion les résidus d'incinération qui ne sont pas extraits de l'installation d'incinération des déchets par l'intermédiaire des fumées.

6. Procédé selon au moins l'une des revendications 1 à 5, caractérisé en ce qu'on utilise un agent d'adsorption (29) contenant du carbone, à haute valeur, pour la couche (27) servant à la séparation des oxydes d'azote et en ce qu'on soumet à un criblage (30) la matière extraite de la couche (29) de séparation des oxydes d'azote et on renvoie le refus dans la couche (29), tandis qu'on envoie le passé aussi à l'appareil de fusion (25).
